# EUROPEAN PATENT APPLICATION

(11) **EP 1 221 683 A2**
(43) Date of publication of application: **10.07.2002**
(21) Application number: 01130383.1
(22) Date of filing: 20.12.2001
(51) Int. Cl.: G08B 25/00, H04L 12/28, H04L 29/06

(54) **Apparatus and method for detection and remote control of events through an Ethernet homenet**

(30) Priority: 27.12.2000 IT PC000041
(71) Applicant: AEM GAS S.p.a., 20122 Milano, MI (IT)
(72) Inventor: Bartolini, Alessandro, 20098 S. Giuliano Milanese, (MI) (IT)
(74) Representative: La Ciura, Salvatore

(57) **Abstract**

The invention relates to an apparatus and relevant method for data acquisition and remote control of events in the premises of one or more users including:
- a meter (3) which produces pulses in accordance with gas consumption and sends them to client interface (1), which said meter is connected via wiring (21) to an input device (10) installed on client interface (1)
- a gas leak detector (2) which, on detecting a gas leak, automatically closes solenoid valve (6) to cut off the gas supply, and sends a signal to client interface (1)
- a plurality of detectors such as fire detectors and burglar alarms which send signals to client interface (1)
- a client interface (1) which receives pulses from meter (3) and communications from gas leak detector (2), and from a plurality of other devices such as fire detectors and burglar alarms which send signals to client interface (1) and transmits the information automatically to the service provider via an Ethernet network.

## Description

This invention relates to an apparatus and method designed for data acquisition and remote control of events through an Ethernet network, and in particular for the control of danger situations in the home.

The method to which this invention relates provides global control of a given installation, such as a household gas installation, with automatic detection of the operating parameters, such as gas consumption, and the occurrence of events such as gas leaks, and transmits the data to a monitoring centre using an Ethernet network, thus enabling the centre to perform operations on the installation by remote control in real time, again through the network.

The invention consequently allows some operations, such as meter reading, to be automated and made cheaper, and also enables the service offered to be extended, providing substantial added value, because a remote monitoring service can be notified of the occurrence of danger situations so that remedial action can be taken almost in real time.

### STATE OF THE ART

The invention falls into the home automation sector.

Data acquisition such as gas meter readings, which have been performed for years by a representative of the service provider, has only recently become partially automated, for example by means of methods whereby the meter reading can be communicated over the telephone by automatic reading devices.

In this second case, the automatic reading units use telephone transmission (by means of a traditional telephone or GSM line or a satellite link), which may or may not be associated with radio apparatus.

This involves the need for a telephone or GSM line or a satellite link, with the associated costs, with the result that this system is not cost-effective for domestic users.

Both methods also present the drawback that they do not supply any information about consumption trends, with the result that consumption methods are not known, and rational management of the service is impossible, as is billing of the service at different rates for different times of use.

Another drastic limitation is that it is impossible to perform any operation on the local installation unless someone is present on the premises who can be notified by telephone of the need to perform operations such as closing the gas supply valve if the customer has forgotten to switch off the gas, or in the event of a gas leak.

To obviate these drawbacks, the method in accordance with the invention uses a local area network connected via an Ethemet network to a monitoring centre, which is also interfaced with a national or regional Ethernet network. The local network sends data relating to meter readings and the occurrence of given events, for example events which generate danger situations, such as gas leaks, to the control centre via an Ethernet network.

The meter reading data can be transmitted several times a day because data transfer to the data collection centre is very cheap in view of the nature of the data transmitted; there is practically no interference with the normal operation of the communication network, which is normally dimensioned for much larger data transmissions.

However, signals associated with danger situations will be sent immediately.

The methodology in accordance with the invention involves installing the unit illustrated in the annexed figures in the user's premises; the said unit is constituted by a data concentrator which is physically connected to all the meters, usually located in one room, and to the client interface (via an RS485 serial line), which is interfaced with the Ethernet network.

A second unit is also interfaced with the said Ethernet network; the number of such units installed will be equal to the number of apartments containing apparatus from which other data is received, such as detection of gas leaks or attempted burglary. A monitoring centre which interacts with the local units and remotely monitors and controls the local apparatus is also connected remotely to the said Ethernet network.

The device and the method to which this invention relates will now be described in detail, and the advantages it presents by comparison with the prior art will be explained by reference to the annexed figures, in which:

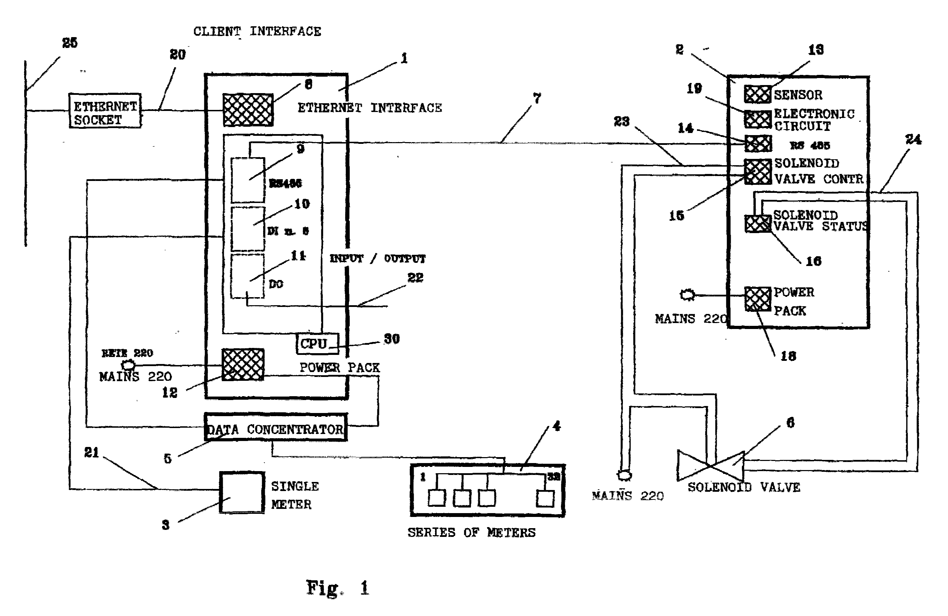

- figure 1 is a diagram of the installation present in each user's premises, which interfaces with the Ethernet network and is connected via the said network to the service provider's Intranet for transmission of consumption data and data signalling the occurrence of a given event

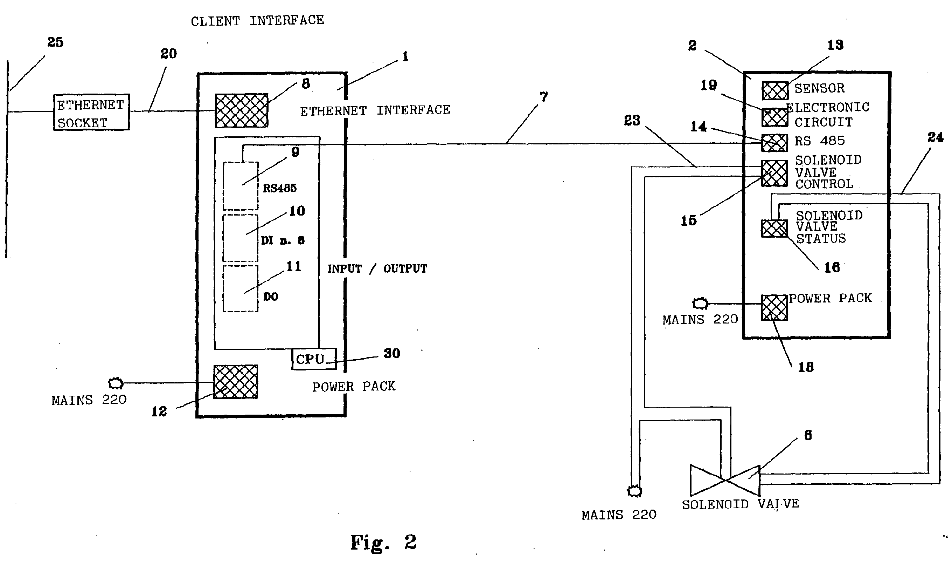

- figure 2 is a block diagram of an installation in which only data that signals the occurrence of a given event is transmitted.

### DETAILED DESCRIPTION OF THE INVENTION

Hereafter, reference will be made to the specific case of a unit designed for remote gas meter reading and remote monitoring of an event such as a gas leak; however, the invention is not limited to this example, but extends to monitoring of a whole series of events such as the presence of carbon monoxide in the premises, intrusions, flooding and the like. Means for transmitting consumption data will not necessarily be present; if they are not, the unit only manages particular events, signals the event to a monitoring centre and takes action if necessary, such as closing a valve by remote control.

The following equipment is installed at each user's premises:
- a client interface (1) which comprises an interface device (8) connected to the Ethernet network (25) via wiring (20); an RS485 serial communication port (9) connected to a gas leak detector (2) via field bus or wiring (7) with MOD BUS RTU (twisted pair) protocol; a series of digital inputs (10), one of which is connected to meter (3) via wiring (21), or to a data concentrator (5) if a series of meters (4) is installed; a digital output device (11) which may be connected to any "smart" actuator, in particular a device which controls a gas supply opening/closing solenoid valve, a burglar alarm, etc., via wiring (22); and a power pack (12), connected to the mains electricity supply, which supplies the energy required for operation of the said components of the client interface device
- a gas leak detector (2) which comprises a sensor (13), an RS485 serial communication port (14) connected to client interface (1) via wiring (7), a solenoid valve control (15) connected to a solenoid valve (6) via wiring (23), a solenoid valve status indicator (16) connected to solenoid valve (6) via wiring (24), and an electronic card (19) with the corresponding power pack (18).

The device described has the following basic functions:
o to detect gas consumption and the corresponding hourly load curve periodically, at preset intervals, and transmit it to the service monitoring centre via the Ethernet network
o to detect other information or events such as gas leaks, and transmit it to the service monitoring centre via the Ethernet network.

Gas consumption is detected by meter (3), which sends pulses proportional to the gas consumption to digital input (10) via wiring (21); the said device (10) directs the data to a CPU (30) with memory, which stores the data and sends it en bloc periodically, for example hourly, via Ethernet interface (8), wiring (20) and Ethernet network (25), to the service provider's monitoring centre.

Gas leaks are detected by sensor (13) which, by means of an electronic circuit (19) of known type, processes the information and operates the control (15) of solenoid valve (6) which, via wiring (23), cuts off the electrical power to the said solenoid valve (6) so as to close it, thus cutting off the gas supply.

Solenoid valve status indicator (16) informs the monitoring centre of the real status of the valve.

At the same time, gas leak detector (2) sends the information relating to the gas leak detected and the closing of solenoid valve (6) to client interface (1) via RS485 serial port (14) of device (2), wiring (7), and RS485 serial port (9) of client interface (1).

The said client interface (1) then automatically sends the information received from device (2) to the service provider's monitoring centre via Ethernet interface (8), wiring (20) and Ethernet network (25) so that the provider is able to take all such measures as it considers necessary to ensure correct operation of the service, especially as regards safety.

For example, if sensor (13) signals a gas leak, an alarm signal will be generated and transmitted to the monitoring centre, and solenoid valve (6) will be automatically closed.

The monitoring centre will then telephone the user to find out what has happened.

In the event of a false alarm, or if the problem has already been solved, the centre can send a signal that resets the alarm.

If there is a malfunction somewhere in the installation, the centre can send out a technician; alternatively, if the customer cannot be contacted or the problem cannot be solved, the centre can cut off the mains gas supply by remote control.

Other devices, such as a fire and smoke monitoring device, flood monitoring device, or burglar alarm (listed by way of example but not of limitation), could be installed in the user's premises.

These devices will be connected via an RS485 serial port and wiring to RS485 serial port (9) of client interface (1), or using the available digital inputs and outputs.

Thus the information received from the said devices can be transmitted automatically, in accordance with the procedure described, to the service provider, which can take the necessary measures.

The client interface devices (1) installed in the premises of each user continue to dialogue via RS485 serial port (9) with gas leak detector (2), and to transmit the information received from the said detector (2) to the service provider via interface (8), wiring (20) and Ethernet network (25).

The methodology described above presents the following main advantages compared with the prior art:
- it provides information about the customer's gas consumption and the way in which such consumption is distributed over time, thus making better management of distribution and possibly customised billing possible
- it enables events such as gas leaks at the user's premises to be detected, and all the necessary steps taken to prevent accidents
- it allows any other devices installed in the user's premises to be monitored, so that additional services can be offered to customers.

An expert in the sector could devise various modifications and variations, all of which should be deemed to fall within the scope of this invention.

## Claims

1. Method for data acquisition and remote control of events in the premises of one or more users, **characterised in that** it includes a permanent connection via an Ethernet network between each user's premises and the utility provider's service centre, which said connection enables the service centre to monitor and remotely control the devices located in the user's premises via the said Ethernet network.

2. Method for data acquisition and remote control of events in the premises of one or more users as claimed in claim 1, in which the said data acquisition relates to gas consumption, **characterised in that** the data received from meter (3) is stored and sent automatically at preset intervals, for example hourly, to the service provider, via the Ethernet network.

3. Method for data acquisition and remote control of events in the premises of one or more users as claimed in claim 1, **characterised in that** it includes the following stages:
• detection of event by a sensor
• generation of a signal relating to the said event
• transmission of the said signal to a client interface connected to an Ethernet network
• processing of the said signal and generation of a signal with the TCP/IP protocol
• transmission of the said signal via an Ethernet network to a service centre
• generation by the service centre of a command which operates an actuator installed in the user's premises
• transmission of the said command via the said Ethemet network and the said client interface to the said actuator.

4. Method for data acquisition and remote control of events in the premises of one or more users as claimed in claim 3, **characterised in that** the said sensor is the type able to act automatically in accordance with the event detected.

5. Apparatus for data acquisition and remote control of events in the premises of one or more users, **characterised in that** it includes a permanent connection via an Ethernet network between a client interface located in each user's premises and the provider's service centre, which said connection enables the service centre to receive data from the said client interface and monitor and remotely control via the said Ethernet network the devices installed in the user's premises.

6. Apparatus for data acquisition and remote control of events in the premises of one or more users as claimed in claim 4, **characterised in that** it includes:
• a sensor or detection device (2) which, on the occurrence of a given event, generates a signal that identifies the said event, which said device is connected to an actuator that operates equipment installed in the user's premises
• a client interface (1) which receives the signals generated by the event detector (2) and automatically transmits the corresponding information to the service provider via an Ethernet network, which said interface is provided with inputs and outputs for connection to the said sensor and the said actuator
• means installed at the said service centre which can generate a command to the said actuator
• means installed at the said service centre which can transmit the said command to the said client interface via an Ethernet network.

7. Apparatus for data acquisition and remote control of events in the premises of one or more users as claimed in claim 6, **characterised in that** it includes:
• a meter (3) which produces pulses in accordance with gas consumption and sends them to client interface (1), which said meter is connected via wiring (21) to an input device (10) installed on client interface (1)
• a gas leak detector (2) which, on detecting a gas leak, automatically closes solenoid valve (6) to cut off the gas supply, and sends a signal to client interface (1)
• a client interface (1) which receives pulses from meter (3) and communications from gas leak detector (2), and transmits the information automatically to the service provider via an Ethernet network.

8. Apparatus for data acquisition and remote control of events in the premises of one or more users as claimed in claim 6, **characterised in that** it includes:
• a meter (3) which produces pulses in accordance with gas consumption and sends them to client interface (1), which said meter is connected via wiring (21) to an input device (10) installed on client interface (1)
• a plurality of event detectors such as fire detectors and burglar alarms which send signals to client interface (1)
• a client interface (1) which receives pulses from meter (3) and communications from the said event detectors such as fire detectors and burglar alarms and automatically transmits the information to the service provider via an Ethernet network.

9. Apparatus for data acquisition and remote control of events in the premises of one or more users, as claimed in claim 7, **characterised in that** additional (serial and/or digital) inputs and (digital) outputs are available for monitoring and control of systems additional to or different from the gas leak detector system.
